**Europäisches Patentamt**

**European Patent Office**

**Office européen des brevets**

(19)

(11) Numéro de publication: **0 145 087**
**B1**

(12) **FASCICULE DE BREVET EUROPEEN**

(45) Date de publication du fascicule du brevet:
16.08.89

(51) Int. Cl.⁴: **A 01 N 63/00**, A 01 N 25/10

(21) Numéro de dépôt: 84201771.7

(22) Date de dépôt: 30.11.84

(54) **Compositions contenant des produits pesticides biosynthétiques et procédé pour leur obtention et leur utilisation.**

(30) Priorité: 12.12.83 FR 8319985

(43) Date de publication de la demande·
19.06.85 Bulletin 85/25

(45) Mention de la délivrance du brevet.
16.08.89 Bulletin 89/33

(84) Etats contractants désignés:
AT BE CH DE FR GB IT LI NL SE

(56) Documents cités:
DE-A- 2 022 391
JP-A- 57 185 344
US-A- 3 850 863

PATENTS ABSTRACTS OF JAPAN, vol. 7, no. 28
(C-149)[1173], 4 février 1983, Tokyo, JP; & JP - A - 57 185
344 (DAICEL K.K.) 15-11-1982

Le dossier contient des informations techniques
présentées postérieurement au dépôt de la demande et
ne figurant pas dans le présent fascicule.

(73) Titulaire: **SOLVAY & Cie (Société Anonyme), Rue du
Prince Albert, 33, B-1050 Bruxelles (BE)**

(72) Inventeur: **Gago, Ignace, Chaussée de Nivelles, 53,
B-1420 Braine-l'Alleud (BE)**
Inventeur: **Detroz, René, Chaussée de Louvain, 534,
B-1328 Ohain (BE)**

## Description

La présente invention concerne des compositions contenant des produits pesticides biosynthétiques, ainsi que des procédés pour leur obtention et leur utilisation.

Les pesticides biosynthétiques présentent de nombreux avantages par rapport aux pesticides chimiques, notamment du fait de leur grande spécificité. Ainsi, les pesticides biosynthétiques toxiques ou pathogènes pour des insectes sont en général non toxiques et non pathogènes pour l'homme et les autres êtres vivants. En outre, vu leur spécificité, ils ne mettent en général pas en danger les prédateurs et parasites naturels des insectes que l'on désire éliminer, ni les insectes bénéfiques. Ils ne sont pas phytotoxiques et ne laissent aucun résidu toxique. Enfin, les insectes ne paraissent pas développer une résistance à ce type de pesticides, contrairement à ce qui se passe lors de l'utilisation d'insecticides organiques de synthèse.

Les pesticides biosynthétiques peuvent être obtenus à partir de micro-organismes très divers. Une classe de pesticides biosynthétiques des plus couramment utilisés dans la lutte contre certains insectes est obtenu à partir de Bacillus thuringiensis dont on connaît de nombreuses variétés.

Les pesticides biosynthétiques n'étant en général pas solubles, ils nécessitent la mise en œuvre de techniques particulières pour leur application. Ils peuvent se présenter sous forme de particules solides sèches ou sous forme de suspensions de particules solides dans un liquide adéquat. En général, ils sont mis en œuvre sous forme de suspensions que l'on pulvérise sur les zones infestées selon diverses techniques connues en elles-mêmes. Toutefois, lorsque ces suspensions sont pulvérisées sur des nappes aquatiques, on observe une perte rapide d'activité au cours du temps et on doit recourir à de nombreuses applications successives pour éviter la réinfestation.

Les compositions à base de produits pesticides biosynthétiques sous forme de particules solides connues présentent quant à elles également certains inconvénients. Leur granulation est malaisée et il faut recourir à l'emploi d'eau pour pouvoir mettre en œuvre un liant. Le séchage des granules ainsi produits présente des difficultés. Au cours du séchage à chaud, on observe fréquemment une perte d'activité car les produits pesticides biosynthétiques sont souvent sensibles à la chaleur. Les granules ont en outre tendance à moisir.

Ainsi on a proposé dans la demande de brevet DE-A-2 022 391 une composition insecticide à base de virus qui contient un composé absorbant la lumière et un liant tel que des polymères notamment l'éthyle de cellulose, des résines, des cires.

Par ailleurs, le document JP-A-57 185 344 (Patents Abstracts Japan, vol. 7, n° 28 (C-149) 1173, 4 février 1983) divulgue une composition à base de polycaprolactone et d'une substance active chimique telle que des insecticides, bactéricides, appâts notamment, obtenue par un procédé dans lequel le mélange des produits est effectué entre 70 et 150 °C.

En outre, on a déjà proposé dans le brevet US-A-3 850 863 de façonner des containers de transplantation de plants à l'aide d'une composition comprenant un polymère thermoplastique biodégradable, tel qu'un polymère de la ε-caprolactone et un produit biodégradable, tel que des écorces d'arbre.

La présente invention vise à procurer des compositions contenant des produits pesticides biosynthétiques sous forme de particules solides ne présentant pas les inconvénients des compositions connues. Elle vise à procurer des compositions sous forme de particules solides contenant des produits pesticides biosynthétiques qui sont stables, présentent une bonne résistance mécanique, ne perdent pas leur activité au cours de leur fabrication et de leur stockage, ne sont pas toxiques pour les mammifères et les êtres humains et ne sont pas phytotoxiques. Les compositions en particules selon l'invention ne se désagrègent ni ne se délitent facilement.

Dans les compositons en particules selon l'invention, les produits pesticides biosynthétiques ne sont pas libérés de manière immédiate lorsque les compositions sont épandues sur la surface à traiter.

Le maintien de l'activité pesticide au sein des compositions en particules selon l'invention présente un intérêt tout particulier lorsque les compositions en particules selon l'invention doivent être consommées par l'organisme qu'elles visent à détruire pour pouvoir exercer leur activité.

Les compositions en particules selon l'invention sont faciles à préparer tant sous la forme de poudres que sous la forme de granules. Elles sont également faciles à mettre en œuvre.

La présente invention concerne des compositions contenant des produits pesticides biosynthétiques sous forme de granules ou d'agglomérats solides, qui contiennent au moins un polyester formé d'un polymère de la ε-caprolactone dont la température de fusion ne dépasse pas 80 °C et un produit pesticide biosynthétique provenant de micro-organismes de la famille des Bacillacées.

Les polyesters sont choisis parmi les polyesters dont la température de fusion est inférieure à 80 °C.

Les meilleurs résultats sont obtenus avec les polyesters dont la température de début de fusion est d'au moins 25 °C et de préférence d'au moins 30 °C.

Divers types de polyesters conviennent. Les polyesters peuvent être des homopolymères ou des copolymères. En général les polyesters sont choisis parmi les homo- et co-polymères de lactones tels que la ε-caprolactone.

Les copolymères de lactones peuvent contenir divers types d'unités comonomériques. En général il s'agit de copolymères d'une lactone avec un oxyde d'oléfine tel que l'oxyde d'éthylène ou l'oxyde de propylène, avec un lactame tel que le caprolactame, avec une autre lactone, ou encore avec un mélange d'un glycol tel que l'éthylène glycol et d'un diacide carboxylique de préférence acyclique tel que l'acide adipique. Les copolymères de lactones peuvent contenir des quantités variables d'unités monomériques dérivées de la lactone. En général, ils contiennent au moins 10% et le plus souvent au moins 20% de leur poids d'unités monomériques dérivées de la lactone. Cette proportion ne dépasse le plus souvent pas 95% et de préférence pas 90% du poids du polymère.

Les polyesters du type homopolymères conviennent bien. Parmi ceux-ci, les homopolymères de lactones conviennent particulièrement bien. Les homopolymères de la ε-caprolactone ont donné d'excellents résultats.

Les polyesters selon l'invention peuvent avoir des masses molaires moyennes variables. En général leur masse molaire moyenne est d'au moins 500 et le plus souvent d'au moins 600. En général leur masse molaire moyenne ne dépasse pas 100 000 et le plus souvent pas 80 000. D'excellents résultats ont été obtenus avec des polymères de masse molaire moyenne d'environ 800 à environ 50 000.

Les doses de polyesters dans les compositions en particules selon l'invention sont variables. En général, la dose de polyesters est d'au moins 0,01 et de préférence d'au moins 0,1% du poids de particules. En général elle ne dépasse pas 90% et de préférence pas 70% du poids des particules.

Par produits pesticides biosynthétiques selon l'invention, on entend désigner les produits pesticides biosynthétiques qui proviennent de micro-organismes de la famille des Bacillacées et qui permettent de lutter contre les parasites animaux et végétaux de l'homme, des animaux et des végétaux (à l'exclusion des micro-organismes provoquant les maladies de l'homme et des animaux) et contre les agents vecteurs de maladies parasitaires et virales. Ces pesticides biosynthétiques peuvent avoir ainsi une action fongistatique ou fongicide, appelée également action anticryptogamique, une action herbicide ou encore une action contre les arthropodes et plus particulièrement contre les insectes.

Ces pesticides biosynthétiques peuvent provenir de divers types d'organismes pathogènes tels que les virus et les bactéries.

Comme micro-organismes du type virus convenant bien en général comme source de pesticides biosynthétiques, on peut signaler les virus à ADN bicaténaire et plus particulièrement les entomopoxvirus, les iridovirus, les baculovirus tels que les virus nucléopolyédriques (NPV) ainsi que les virus «granulosis» (GV), et les virus à ARN bicaténaire tels que les virus cytoplasmopolyédriques (CPV). Parmi ceux-ci les virus nucléopolyédriques des insectes conviennent particulièrement bien.

Comme micro-organismes bactériens convenant bien en général comme source de pesticides biosynthétiques, on peut signaler les eubactériales de la classe des sporulales et plus particulièrement celles de l'ordre des bacillales et celles de l'ordre des clostridiales, les eubactériales de la classe des asporulales et plus particulièrement de l'ordre des bactériales et les bactéries de l'ordre des Rickettsiales.

L'invention s'applique tout particulièrement aux pesticides biosynthétiques provenant des micro-organismes de la famille des Bacillacées qui ont une action insecticide.

Les produits pesticides biosynthétiques contenus dans les compositions selon l'invention proviennent de préférence des micro-organismes du genre Bacillus. Parmi ceux-ci, conviennent particulièrement bien les pesticides biosynthétiques dérivés de micro-organismes tels que le Bacillus thuringiensis, le Bacillus sphaericus, le Bacillus popilliae, le Bacillus cereus, le Bacillus lentimorbus et le Bacillus fribourgensis.

De bons résultats ont été obtenus avec les Bacillus thuringiensis de tous sérotypes et plus particulièrement avec ceux des sérotypes 1, 3a, 3a3b, 7, 9, 10 et 14. Les meilleurs résultats ont été obtenus avec les Bacillus thuringiensis de sérotypes 1 (variété thuringiensis), 3a3b (variété Kurstaki), 7 (variété aizawa) et 14 (variété israëlensis).

Les produits pesticides biosynthétiques contenus dans les compositions selon l'invention peuvent également provenir de micro-organismes quelconques transformés par insertion d'ADN codant pour la fabrication de toxines et provenant de micro-organismes pathogènes de la famille des Bacillacées.

Les produits pesticides biosynthétiques peuvent se trouver dans les compositions selon l'invention sous des formes très diverses. Ainsi, ils peuvent se présenter sous la forme des organismes eux-mêmes à un stade quelconque de leur évolution, en ce comprises les formes végétatives ventuelles, tels quels, en association avec leur milieu de culture, sous forme totalement ou partiellement lysée, sous forme totalement ou partiellement sporulée, sous une forme ayant libéré partiellement ou totalement les spores par divers moyens tels que l'autolyse bactérienne, sous la forme des produits qui sont excrétés spontanément par les organismes tels que les exotoxines, sous la forme des produits que l'on peut extraire de ces organismes tels que les endotoxines par toute méthode connue en elle-même impliquant ou non une lyse de l'organisme en cause, sous la forme des produits éventuellement libérés par les organismes au cours de certaines étapes de leur évolution (cristaux associés ou non aux spores) ou encore sous plusieurs de ces formes simultanément.

Ces différentes formes peuvent éventuellement être associées à des résidus du milieu de culture. De bons résultats ont été obtenus avec le mélange contenant des spores, les cristaux associés et éventuellement des exotoxines qui se forment spontanément lors de l'autolyse de la bactérie en fin de sporulation. Un tel mélange peut contenir, outre les spores, les cristaux associés ou non aux spores et les exotoxines éventuelles, des cellules ou des débris de cellules ainsi que des produits solides résiduaires du milieu nutritif mis en œuvre lors de la culture.

Les compositions selon l'invention peuvent également contenir plusieurs produits pesticides biosynthétiques d'origines différentes.

La teneur en produits pesticides biosynthétiques dans les compositions en particules selon l'invention est en général d'au moins 0,01% et de préférence d'au moins 0,1% du poids de la composition. Elle ne dépasse en général pas 90% et le plus souvent pas 80% de leur poids.

Les produits pesticides biosynthétiques mis en œuvre peuvent contenir de l'eau. La quantité d'eau peut varier dans de larges limites. Les produits pesticides biosynthétiques peuvent ainsi contenir jusqu'à 92% en poids d'eau et le plus souvent jusqu'à 88% en poids d'eau. En général, ils contiennent au moins 1% et de préférence au moins 2% en poids d'eau. Dans le cas du Bacillus thuringiensis, ils comprennent en général des spores, des cristaux associés et éventuellement des exotoxines et contiennent en général de 2 à 88% en poids d'eau.

Les compositions en particules selon l'invention peuvent contenir en outre au moins une charge solide. Les charges peuvent être des solides de type organique ou minéral. Comme charges solides de type minéral (ou inorganique), on peut utiliser des produits à base de silice, d'alumine ou de carbonate tels que les différentes qualités d'alumine, les aluminates, la silice broyée ou précipitée, le sable broyé, la bentonite, l'attapulgite, la pyrophylite, la magmabentonite, le talc, le kaolin, les terres à diatomées, les terres à foulon, les silicates synthétiques, la célite, la vermiculite, l'argile, le calcaire, la craie, le carbonate de calcium ou leurs mélanges. Comme charges de type organique on peut utiliser des produits naturels tels que le lactose, l'amidon, les farines et sons d'origine végétale ainsi que des fragments de végétaux en ce compris toute matière sous forme de particules de toutes dimensions obtenue à partir de graines de végétaux. En général, on choisit des charges solides de type organique. Celles-ci sont choisies de préférence parmi les farines, sons et morceaux de graines de diverses céréales telles que le soja, le blé et le maïs. Les charges solides se présentent sous la forme de particules de dimensions variables. En général leur dimension est comprise entre 0,0001 et 5 mm.

Les charges solides peuvent être présentes à des doses variables. En général, les compositions en particules selon l'invention contiennent au moins 5% et de préférence au moins 10% en poids de charges. La dose de charges ne dépasse en général pas 95% et de préférence pas 99% du poids des compositions.

Les compositions en particules selon l'invention peuvent contenir en outre divers autres additifs. Elles peuvent contenir des parfums ou des masques d'odeurs et divers préservatifs tels que des antioxydants, des agents antibactériens (bactéricides ou bactériostatiques) et des agents susceptibles d'absorber les rayonnements ultraviolets (qui pourraient éventuellement causer la désactivation du pesticide biosynthétique). Elles peuvent aussi contenir des pesticides organiques de synthèse (pesticides chimiques) tels que les N-acyl-N'-halogenoaryl urées et leurs dérivés substitués et plus particulièrement la 1-(4-chlorophényl)-3-(2,6-difluorobenzoyl)-urée. Elles peuvent également contenir des résidus de la fabrication du pesticide biosynthétique.

Lorsque les compositions en particules selon l'invention contiennent ces autres additifs, ceux-ci peuvent être présents en quantités variables. Leur dose ne dépasse en général pas 20% et de préférence pas 10% du poids des particules. Les autres additifs peuvent être présents à des doses d'au moins 0,001 et de préférence 0,01% du poids des particules.

Des compositions en particules particulièrement avantageuses peuvent contenir de 0,1 à 30% en poids de pesticides biosynthétiques en ce comprise la quantité d'eau éventuellement présente dans le pesticide, de 0,1 à 70% en poids de polyesters, de 10 à 95% en poids de charges solides et éventuellement de 0,01 à 10% en poids d'autres additifs.

Lorsque les produits pesticides biosynthétiques mis en œuvre se présentent sous une forme fort hydratée contenant de 40 à 92% en poids d'eau, les compositions peuvent contenir de manière avantageuse de 0,1 à 20% en poids de pesticides biosynthétiques, de 0,1 à 70% en poids de polyesters, de 50 à 99% en poids de charges et éventuellement de 0,01 à 10% en poids d'autres additifs.

Dans les compositions en particules selon l'invention, les produits pesticides biosynthétiques, éventuellement mélangés avec les charges solides ou les autres additifs éventuels, sont en général enrobés par un agent d'enrobage qui contient les polyesters. Dans ces particules, l'agent d'enrobage peut constituer une couche continue ou non, disposée autour de la particule dont le cœur contient au moins un produit pesticide biosynthétique et, éventuellement les charges solides ou les autres additifs, mais il peut aussi servir de liant d'agglomération de particules fines élémentaires. Dans ce cas, chacune des particules fines élémentaires contenant le pesticide biosynthétique et éventuellement une charge solide est entourée d'une couche continue ou non d'agent d'enrobage.

L'agent d'enrobage peut éventuellement contenir d'autres constituants tels que des liants. En général, l'agent d'enrobage contient au moins 80% et de préférence au moins 90% de polyesters.

Les compositions en particules selon l'invention peuvent avoir des dimensions très variables. Leurs dimensions sont en général supérieures à 0,01 mm. Le plus souvent, elles sont comprises entre 0,01 et 100 mm. Comme il a été dit précédemment, les particules peuvent se présenter soit sous forme de granules dont la couche extérieure contient un agent d'enrobage contenant les polyesters, soit sous forme d'agglomérats de particules fines élémentaires liées entre elles par l'agent d'enrobage contenant les polyesters. Ces agglomérats peuvent avoir des formes quelconques telles que celles de pastilles, de tablettes, de comprimés et de briquettes. Dans le cas de briquettes, les dimenstions peuvent être supérieures à 100 mm et elles sont le plus souvent de 20 à 500 mm.

La présente invention concerne également un procédé pour la fabrication des compositions en particules selon l'invention.

Les compositions en particules selon l'invention peuvent avantageusement être obtenues en enrobant le produit pesticide biosynthétique sous forme solide avec le polyester soit à l'état liquide ou fondu soit sous forme de solution. De manière avantageuse on incorpore simultanément à la composition des charges solides et les autres additifs éventuels.

En général, le produit pesticide biosynthétique est mélangé avec les charges et les autres additifs éventuels pour former un mélange solide.

L'enrobage de ce mélange peut se faire selon diverses techniques. Le polyester peut être mis en œuvre tel quel à l'état liquide ou fondu ou sous forme de solution dans un solvant. L'enrobage peut se faire dans divers types d'appareils connus en eux-mêmes et convenant pour l'enrobage, le mélange ou l'agglomération. Des granulateurs comme les tambours rotatifs, les soles tournantes, etc., ou des broyeurs-mélangeurs tels que des mixers, etc., ou encore des mélangeurs tels que des mélangeurs à bras, etc., peuvent ainsi convenir. On peut également utiliser pour la production de briquettes des appareils convenant pour le moulage ou la compaction tels que des presses.

Une technique particulière consiste à traiter, dans un appareil des types précités, le mélange solide par le polyester à l'état liquide ou fondu et, si nécessaire, à ajouter les autres additifs. Le polyester est en général préchauffé de manière à le rendre fluide en général à une température égale à sa température de fusion ou légèrement supérieure à celle-ci, le plus souvent à une température comprise entre la température de fusion et cette température plus 20 °C. La pâte chaude obtenue est ensuite envoyée dans un granulateur ou tout autre appareil susceptible de fabriquer des granules.

Selon une autre technique, le polyester est mis en œuvre sous la forme d'une solution de préférence dans un solvant organique. La suite des opérations est similaire à celles utilisées pour l'enrobage à l'intervention de polyesters à l'état liquide ou fondu.

Divers solvants organiques peuvent être utilisés à cette fin. Ils sont en général choisis parmi les solvants organiques comportant des groupes aromatiques ou les solvants organiques substitués par des halogènes tels que le chlore et le brome, des groupes nitro, des groupes carbonyles, des groupes carboxyles, des groupes esters et des groupes alkoxy. On peut également utiliser des mélanges de solvants. On peut ainsi utiliser des mélanges des solvants précités entre eux ou avec des alcools. Les solvants sont le plus souvent choisis parmi les composés organiques contenant de 1 à 12 atomes de carbone; quand il s'agit de composés aromatiques leur nombre d'atomes de carbone est de 4 à 12. Les alcools contiennent en général de 1 à 8 atomes de carbone.

De bons résultats ont été obtenus avec des solvants halogénés ou plus particulièrement des solvants chlorés seuls ou en mélange avec des alcools.

Les meilleurs résultats ont été obtenus avec un chlorométhane tel que le chlorure de méthylène seul ou en mélange avec un alcool tel que le méthanol.

Les solutions de polyesters peuvent contenir des quantités variables de polyesters. En général, pour des raisons économiques, on utilise des solutions dont la concentration est égale à, ou voisine de, la saturation. De bons résultats sont obtenus avec des solutions contenant de 10 à 60% de leur poids de polyesters.

La présente invention concerne également l'utilisation des compositions en particules selon l'invention.

Les compositions en particules selon l'invention peuvent être utilisées comme pesticides et plus particulièrement comme agents pour éliminer les insectes à un stade quelconque de leur développement. Pour ce faire, elles sont épandues sur les surfaces infestées selon toutes méthodes connues en elles-mêmes telles que l'épandage manuel, l'épandage mécanique et plus particulièrement l'épandage par voie aérienne. Elles peuvent notamment être épandues sur les surfaces infestées par des insectes et plus particulièrement par des lépidoptères, des diptères, des coléoptères, des aphaniptères, des orthoptères, des isoptères et des homoptères.

Les doses à mettre en œuvre sont fonction du produit pesticide biosynthétique utilisé et de l'agent pathogène à éliminer.

Dans le cas du Bacillus thuringiensis et plus particulièrement des sérotypes 1, 3a3b, 7 et 14, on épand en général de 50 à 5000 g de particules solides à l'hectare.

Afin d'illustrer l'invention sans pour autant en limiter la portée, on donne ci-après un exemple pratique de réalisation.

Exemple

Dans un mixer, on mélange pendant une minute 2 g de poudre primaire de Bacillus thuringiensis sérotype H14 (B.t.14) avec 81 g de farine de froment et 17 g de polycaprolactone CAPA 220 (marque déposée) commercialisée par INTEROX.

La poudre primaire présente par mg une activité d'environ 12 000 unités internationales (ITU) mesurée à l'aide d'Aedes Aegypti selon la méthode de titrage biologique de H. de Barjac et I. Larget, WHO-VBC-79.744. Elle contient environ 4–5% en poids d'eau.

L'agitation dans le mixer est ensuite maintenue durant 4 minutes sous une grande vitesse de rotation ce qui provoque un échauffement et la fusion de la polycaprolactone. On obtient ainsi des granules ayant une dimension moyenne comprise entre 0,1 et 1 mm.

62 mg de granules sont épandus sur la surface d'une eau stagnante contenue dans une cuve de 28 cm de diamètre (8 litres d'eau).

On introduit périodiquement 50 larves de moustiques dans la cuve.

La première introduction de larves de moustiques est faite au moment de l'épandage des granules. Après 5 heures le taux de mortalité est de 100%.

La deuxième introduction de larves est faite 24 heures après l'épandange des granules. Après 5 heures 30 minutes, le taux de mortalité est de 100%.

La troisième introduction de larves est faites 120 heures après l'épandage des granules. Après un temps compris entre 7 heures et 24 heures le taux de mortalité est de 100%.

## Revendications

1. Compositions sous forme de granules ou d'agglomérats solides contenant au moins un produit pesticide biosynthétique caractérisées en ce qu'elles contiennent en outre au moins un polyester formé d'un polymère de la ε-caprolactone dont la température de fusion est inférieure à 80 °C et un produit pesticide biosynthétique provenant de micro-organismes de la famille des Bacilacées.

2. Compositions selon la revendication 1, caractérisées en ce qu'elles contiennent un produit pesticide biosynthétique provenant de micro-organismes du genre Bacillus thuringiensis ou Bacillus sphaericus.

3. Compositions selon la revendication 1 ou 2, caractérisées en ce qu'elles contiennent en outre au moins une charge solide.

4. Compositions selon la revendication 3, caractérisées en ce qu'elles contiennent une charge solide choisie parmi les farines, sons et morceaux de graines de céréales.

5. Compositions selon l'une quelconque des revendications 1 à 4, caractérisées en ce qu'elles contiennent de 0,1 à 80% en poids de produits pesticides biosynthétiques, de 0,1 à 70% en poids de polyesters, de 10 à 95% en poids de charges solides.

6. Procédé pour l'obtention de compositions selon l'une quelconque des revendications 1 à 5, caractérisé en ce qu'on enrobe le produit pesticide biosynthétique sous forme solide avec le polyester à l'état liquide ou fondu.

7. Procédé pour l'obtention de compositions selon l'une quelconque des revendications 1 à 5, caractérisé en ce qu'on enrobe le produit pesticide biosynthétique sous forme solide avec une solution du polyester dans un solvant organique.

8. Procédé selon l'une quelconque des revendications 6 ou 7, caractérisé en ce qu'on incorpore simultanément une charge solide à la composition.

9. Procédé pour éliminer les insectes caractérisé en ce qu'on épand sur les surfaces infestées les compositions selon l'une quelconque des revendications 1 à 5.

## Claims

1. Compositions in the form of solid agglomerates or granules containing at least one biosynthetic pesticidal product, characterised in that they also contain at least one polyester composed of a polymer of ε-caprolactone having a melting point below 80 °C, and a biosynthetic pesticidal product originating from microorganisms of the Bacillaceae family.

2. Compositions according to Claim 1, characterised in that they contain a biosynthetic pesticidal product originating from microorganisms of the genus Bacillus thuringiensis or Bacillus sphaericus.

3. Compositions according to Claim 1 or 2, characterised in that they also contain at least one solid filler.

4. Compositions according to Claim 3, characterised in that they contain a solid filler chosen from the flours, brans and fragments of cereal seeds.

5. Compositions according to any one of Claims 1 to 4, characterised in that they contain from 0.1 to 80% by weight of biosynthetic pesticidal products, from 0.1 to 70% by weight of polyesters and from 10 to 95% by weight of solid fillers.

6. Process for the production of compositions according to any one of Claims 1 to 5, characterised in that the biosynthetic pesticidal product in solid form is coated with the polyester in liquid or molten state.

7. Process for the production of compositions according to any one of Claims 1 to 5, characterised in that the biosynthetic pesticidal product in solid form is coated with a solution of the polyester in an organic solvent.

8. Process according to either one of Claims 6 or 7, characterised in that a solid filler is incorporated simultaneously in the composition.

9. Process for eliminating insects, characterised in that the compositions according to any one of Claims 1 to 5 are scattered on the infested areas.

## Patentansprüche

1. Zusammensetzungen in Form von Körnchen oder festen Agglomeraten enthaltend wenigstens ein biosynthetisches Pestizidprodukt, dadurch gekennzeichnet, daß sie außerdem wenigstens einen Polyester gebildet aus einem Polymer von ε-Caprolacton, dessen Schmelztemperatur unter 80 °C liegt, und ein biosynthetisches Pestizidprodukt, das aus Mikroorganismen der Familie der Bazillazeen stammt, enthalten.

2. Zusammensetzungen nach Anspruch 1, dadurch gekennzeichnet, daß sie ein biosynthetisches Pestizidprodukt, das aus Mikroorganismen der Art Bacillus thuringiensis oder Bacillus sphaericus stammt, enthalten.

3. Zusammensetzungen nach Anspruch 1 oder 2, dadurch gekennzeichnet, daß sie außerdem wenigstens einen festen Füllstoff enthalten.

4. Zusammensetzungen nach Anspruch 3, dadurch gekennzeichnet, dass sie einen festen Füllstoff, ausgewählt unter den Mehlen, Kleien und Stücken von Getreidekörnern, enthalten.

5. Zusammensetzungen nach einem der Ansprüche 1 bis 4, dadurch gekennzeichnet, daß sie von 0,1 bis 80 Gew.-% biosynthetische Pestizidprodukte, von 0,1 bis 70 Gew.-% Polyester, von 10 bis 95 Gew.-% feste Füllstoffe enthalten.

6. Verfahren zur Herstellung von Zusammensetzungen nach einem der Ansprüche 1 bis 5, dadurch gekennzeichnet, daß man das feste biosynthetische Pestizidprodukt mit dem Polyester in flüssigem oder geschmolzenem Zustand umhüllt.

7. Verfahren zur Herstellung von Zusammensetzungen nach einem der Ansprüche 1 bis 5, dadurch gekennzeichnet, daß man das feste biosynthetische Pestizidprodukt mit einer Lösung des Polyesters in einem organischen Lösungsmittel umhüllt.

8. Verfahren nach einem der Ansprüche 6 oder 7, dadurch gekennzeichnet, daß man gleichzeitig einen festen Füllstoff in die Zusammensetzung einsetzt.

9. Verfahren zur Eliminierung der Insekten, dadurch gekennzeichnet, daß man auf den befallenen Oberflächen die Zusammensetzungen nach einem der Ansprüche 1 bis 5 verteilt.